# EUROPÄISCHE PATENTSCHRIFT

(11) **EP 1 646 705 B1**
(45) Veröffentlichungstag und Bekanntmachung des Hinweises auf die Patenterteilung: **19.12.2007**
(21) Anmeldenummer: 04740092.4
(22) Anmeldetag: 19.06.2004
(51) Int. Cl.: C10G 33/04, C08G 83/00, C08G 63/12

(54) **ALKOXYLIERTE DENDRIMERE UND IHRE VERWENDUNG ALS BIOLOGISCH ABBAUBARE EMULSIONSSPALTER**
ALKOXYLATED DENDRIMERS, AND USE THEREOF AS BIODEGRADABLE DEMULSIFIERS
DENDRIMERES ALCOXYLES ET LEUR UTILISATION COMME DESEMULSIFIANTS BIODEGRADABLES

(30) Priorität: 02.07.2003 DE 10329723
(43) Veröffentlichungstag der Anmeldung: 19.04.2006
(73) Patentinhaber: Clariant Produkte (Deutschland) GmbH, 65929 Frankfurt am Main (DE)
(72) Erfinder: LEINWEBER, Dirk, 65824 Schwalbach (DE); FEUSTEL, Michael, 55278 Köngernheim (DE); WASMUND, Elisabeth, 84508 Burgkirchen (DE); GRUNDNER, Heidi, 84518 Garching/Alz (DE)
(74) Vertreter: Mikulecky, Klaus
(86) Internationale Anmeldenummer: PCT/EP2004/006651
(87) Internationale Veröffentlichungsnummer: WO 2005/003260

(56) Entgegenhaltungen:
- WO-A-03/062306
- US-A- 4 558 120
- US-A- 4 737 550
- US-A- 5 445 765

## Beschreibung

Die vorliegende Erfindung betrifft die Verwendung alkoxylierter Dendrimere zur Spaltung von Wasser-Öl-Emulsionen, insbesondere in der Rohölgewinnung.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im allgemeinen sogenannter Erdölemulsionsspalter. Es handelt sich bei Erdölemulsionsspaltern um grenzflächenaktive polymere Verbindungen, die in der Lage sind, innerhalb kurzer Zeit die erforderliche Trennung der Emulsionsbestandteile zu bewirken.

Als Erdölemulsionsspalter sind in US-4 321 146 Alkylenoxid-Blockcopolymere und in US-5 445 765 alkoxylierte Polyethylenimine offenbart. Diese können als einzelne Komponenten, in Mischungen mit anderen Emulsionsspaltern, oder auch als vernetzte Produkte eingesetzt werden. Vernetzungen werden beispielsweise mittels Umsetzungen von alkoxylierten niedermolekularen Alkoholen (wie z.B. Glycerin oder Pentaerythrit) oder alkoxylierten Alkylphenolformaldehydharzen mit bifunktionellen Verbindungen wie Diepoxiden oder Diisocyanaten durchgeführt. Solche vernetzten Verbindungen werden in US-5 759 409 und US-5 981 687 offenbart.

US-4 558 120 und US 4 737 550 beschreiben engmaschige sternförmige Polymere (Amidoamin-Dendrimere), die/als wasserlösliche Demulgatoren (genauer: Deoiler) für Rohöl/Wasser-Emulsionen eingesetzt werden können. Diese Produkte wurden weder alkoxyliert noch zur Spaltung von Wasser/Rohöl-Emulsionen eingesetzt.

Die Verwendung von alkoxylierten, alkylierten bzw. veresterten dendritischen Polyestern (insbesondere Boltorne^{®} der Firma Perstorp) wird in US-6 114 458 beschrieben. Die Produkte sollen unter anderem als Härter für wärmehärtende Harze, als Viskositätsmodifikatoren für lineare Polymere oder als Stabilisatoren für Suspensionen und Emulsionen geeignet sein.

Die unterschiedlichen Eigenschaften (z.B. Asphalten-, Paraffin- und Salzgehalt, chemische Zusammensetzung der natürlichen Emulgatoren) und Wasseranteile verschiedener Rohöle machen es unabdingbar, die bereits vorhandenen Erdölemulsionsspalter weiter zu entwickeln. Insbesondere steht eine niedrige Dosierrate und breite Anwendbarkeit des einzusetzenden Erdölemulsionsspalters neben der anzustrebenden höheren Effektivität aus ökonomischer und ökologischer Sicht im Vordergrund. Weiterhin werden zunehmend Emulsionsspalter benötigt, die eine gute biologische Abbaubarkeit sowie eine geringe Bioakkumulation aufweisen, um die in Diskussion geratenen Produkte auf Alkylphenolbasis zu ersetzen.

Es ergab sich somit die Aufgabe, neue alkylphenolfreie Erdölemulsionsspalter zu entwickeln, die den bereits bekannten Produkten in der Wirkung überlegen sind, in noch niedrigerer Dosierung eingesetzt werden können und eine bessere biologische Abbaubarkeit aufweisen.

Es stellte sich überraschenderweise heraus, dass alkoxylierte dendritische Polyester (Dendrimere) bereits bei sehr niedriger Dosierung eine ausgezeichnete Wirkung als Erdölemulsionsspalter zeigen. Zudem zeigten sie deutlich bessere biologische Abbaubarkeiten nach OECD 306 im Vergleich zu vielen herkömmlichen kommerziellen Emulsionsspaltern.

Gegenstand der Erfindung ist daher die Verwendung alkoxylierter Dendrimere mit einem Molekulargewicht von 2400 bis 100.000 g/mol, die mit C₂-C₄-Alkylenoxidgruppen oder einer Mischung solcher Alkylenoxidgruppen alkoxyliert sind, so dass das alkoxylierte Dendrimer einen Alkoxylierungsgrad von 1 bis 100 Alkylenoxideinheiten pro freier OH-Gruppe aufweist, zur Spaltung von Öl/Wasser-Emulsionen, in Mengen von 0,0001 bis 5 Gew.-%, bezogen auf den Ölgehalt der zu spaltenden Emulsion.

Diese alkoxylierten Dendrimere sind bevorzugt aus Dendrimeren durch Alkoxylierung der freien OH-Gruppen mit einem C₂-C₄-Alkylenoxid oder einer Mischung solcher Alkylenoxide im molaren Überschuss erhältlich, so dass das alkoxylierte Dendrimer den genannten Alkoxylierungsgrad aufweist. Dendrimere sind auch kommerziell-erhältlich. Besonders bevorzugt ist die Verwendung von Boltorn^{®} H20 und H310 (Perstorp).

Die Herstellung und die molekularen Strukturen der erfindungsgemäß verwendeten Dendrimere sind in US-5 418 301 umfassend beschrieben. Es handelt sich hierbei um dendritische Polyester, die aus einem zentralen Startmolekül (in der Regel ein Di- oder Polyol) und anschließender sukzessiver Mehrfach-Veresterung mit einer zwei weitere reaktive Gruppen besitzenden Carbonsäure (wie beispielsweise Dimethylolpropansäure) aufgebaut werden. Abb. 1 zeigt das Reaktionsprinzip.

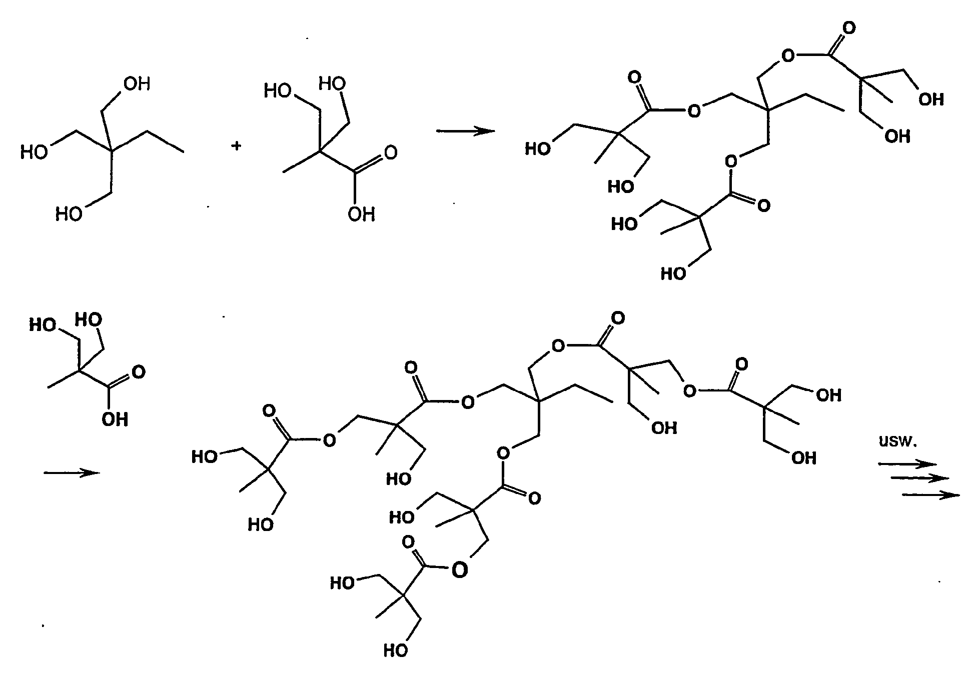

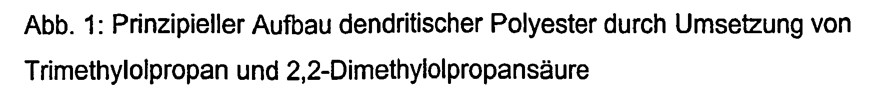

Die zur Alkoxylierung verwendeten Dendrimere sind dendritische Polyester, im allgemeinen basierend auf einem mono-, di- oder polyfunktionellen Startalkohol und einer Carbonsäure, die wenigstens zwei Hydroxygruppen aufweist, als dendritische Wachstumskomponente. Bei dem verwendeten Startalkohol handelt es sich vorzugsweise um Bis(trimethylolpropan), Bis(trimethylolethan), Dipentaerythrit, Pentaerythrit, alkoxyliertes Pentaerythrit, Trimethylolethan, Trimethylolpropan, alkoxyliertes Trimethylolpropan, Glycerin, Diglycerin, Triglycerin, Polyglycerin, Neopentylglykol, Dimethylolpropan, Sorbitol oder Mannitol.

Bei der Carbonsäure, die zum dendritischen Kettenwachstum führt, handelt es sich vorzugsweise um Dimethylolpropansäure, α,α-Bis(hydroxymethyl)butansäure, α,α,α-Tris(hydroxymethyl)ethansäure, α,α-Bis(hydroxymethyl)pentansäure, α,α-Bis(hydroxy)propansäure oder 3,5-Dihydroxybenzoesäure.

Die sternförmigen monodispersen Dendrimere werden mit einem oder mehreren C₂-C₄-Alkylenoxiden, vorzugsweise Ethylenoxid (EO) oder Propylenoxid (PO), alkoxyliert. Das Alkoxylierungsmittel wird im molaren Überschuss angewandt. Die Alkoxylierung erfolgt, wie im Stand der Technik bekannt, durch Umsetzung der Dendrimere mit einem Alkylenoxid unter erhöhtem Druck von im allgemeinen 1,1 bis 20 bar bei Temperaturen von 50 bis 200°C. Die Alkoxylierung erfolgt an den freien OH-Gruppen der Dendrimere. Es wird so viel Alkylenoxid eingesetzt, dass der mittlere Alkoxylierungsgrad zwischen 1 und 100 Alkylenoxideinheiten pro freier OH-Gruppe liegt. Unter mittlerem Alkoxylierungsgrad wird hier die durchschnittliche Zahl von Alkoxyeinheiten verstanden, die an jede freie OH-Gruppe angelagert wird. Er liegt vorzugsweise bei 2 bis 70, insbesondere bei 5 bis 50, speziell bei 20 bis 40.
Vorzugsweise wird die Alkoxylierung erst mit PO und dann mit EO durchgeführt. Das Verhältnis von EO zu PO im alkoxylierten Dendrimer liegt vorzugsweise zwischen 1:1 und 1:10, insbesondere 1:2 bis 1:10. Erfindungsgemäß kann die Alkoxylierung allerdings auch in umgekehrter Reihenfolge, erst EO, dann PO oder mit einer Mischung aus PO und EO erfolgen.

Das nach Alkoxylierung erhaltene Dendrimer hat vorzugsweise ein Molekulargewicht von 2.400 bis 80.000 Einheiten, insbesondere von 10.000 bis 50.000 Einheiten, speziell 15.000 bis 30.000.

Die nach dem beschriebenen Verfahren hergestellten alkoxylierten Dendrimere werden beispielhaft auf Basis eines Dendrimers aus Trimethylolpropan und 2,2-Dimethylolpropansäure durch folgende Struktur wiedergegeben (Formel 1):

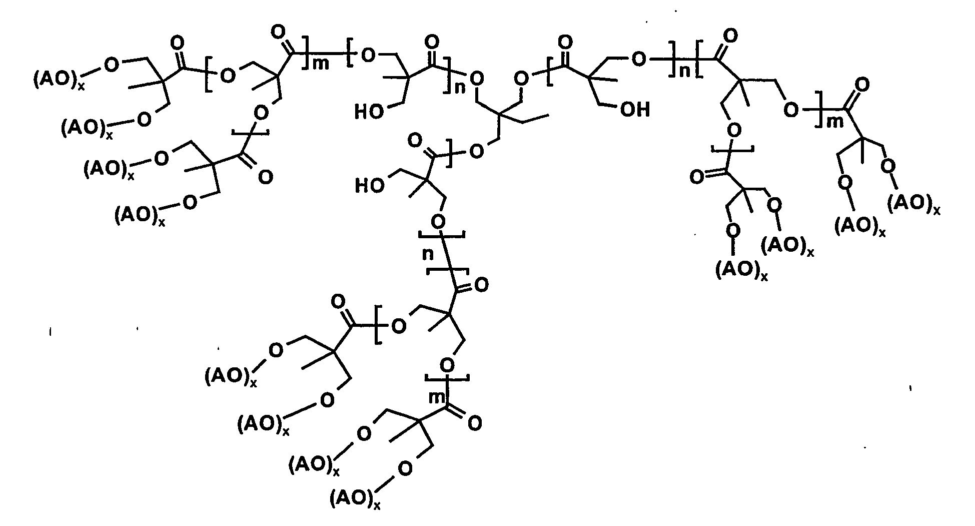

(AO)ₓ-O-Reste stehen für die alkoxylierten OH-Gruppen, worin AO eine C₂-C₄-Alkylenoxideinheit und x die Alkoxylierungsgrade darstellen. n und m stehen für den entsprechenden Kondensationsgrade von 2,2-Dimethylolpropansäure und sind detailliert in US-5 418 301 beschrieben.

Ein bevorzugter Gegenstand vorliegender Erfindung ist die Verwendung der alkoxylierten Dendrimere als Spalter für Öl/Wasser-Emulsionen in der Erdölförderung.

Erfindungsgemäß können die alkoxylierten Dendrimere zur Erhöhung des Molekulargewichts und damit zur Verbesserung der Spalteigenschaften mit multifunktionellen Vernetzern wie im Stand der Technik bekannt umgesetzt werden.

Folgende Vernetzer sind besonders bevorzugt:
Bisphenol-A-diglycidylether, Butan-1,4-dioldiglycidylether, Hexan-1,6-dioldiglycidylether, Ethylenglykoldiglycidylether, Cyclohexandimethanoldiglycidylether, Resorcindiglycidylether, Glycerindiglycidylether, Glycerintriglycidylether, Glycerinpropoxylattriglycidylether, Polyglycerinpolyglycidylether, p-Aminophenoltriglycidylether, Polypropylenglykoldiglycidylether, Pentaerythrittetraglycidylether, Sorbitolpolyglycidylether, Trimethylolpropantriglycidylether, Castoröltriglycidylether, Diaminobiphenyltetraglycidylether, Sojaölepoxid, Adipinsäure, Maleinsäure, Phthalsäure, Maleinsäureanhydrid, Bernsteinsäureanhydrid, Dodecylbernsteinsäureanhydrid, Phthalsäureanhydrid, Trimellitsäureanhydrid, Pyromellitsäureanhydrid, Dimethoxydimethylsilan, Diethoxydimethylsilan, Tetraalkoxysilane, Toluoldiisoyanat, Diphenylmethandiisocyanat.

Die genannten Vernetzer bzw. chemisch verwandte Verbindungen werden bevorzugt im Bereich von 0,1 - 10, besonders bevorzugt 0,5 - 5 und speziell 1,0 - 2,5 Gew.-%, bezogen auf das alkoxylierte Dendrimer, eingesetzt.

Zur Verwendung als Erdölemulsionsspalter werden die alkoxylierten Dendrimere den Wasser-Öl-Emulsionen zugesetzt, was vorzugsweise in Lösung geschieht. Als Lösungsmittel für die alkoxylierten Dendrimere werden paraffinische oder aromatische Lösungsmittel bevorzugt. Die vernetzten alkoxylierten Dendrimere werden in Mengen von 0,0001 bis 5, vorzugsweise 0,0005 bis 2, insbesondere 0,0008 bis 1 und speziell 0,001 bis 0,1 Gew.-% bezogen auf den Ölgehalt der zu spaltenden Emulsion verwendet.

Allgemeine Versuchsvorschriften für die Alkoxylierung

### Ethylenoxid

Die in den folgenden Beispielen genannten Dendrimere wurden in einen 1 I-Glasautoklaven eingebracht und der Druck im Autoklaven mit Stickstoff auf ca. 0,2 bar Überdruck eingestellt. Es wurde langsam auf 140°C aufgeheizt und nach Erreichen dieser Temperatur der Druck erneut auf 0,2 bar Überdruck eingestellt. Danach wurde bei 140°C die gewünschte Menge EO (siehe Beispiele) zudosiert, wobei der Druck 4,5 bar nicht übersteigen sollte. Nach beendeter EO-Zugabe ließ man noch 30 Minuten bei 140°C nachreagieren.

### Propylenoxid

Die in den folgenden Beispielen genannten Dendrimere wurden in einen 1 I-Glasautoklaven eingebracht und der Druck im Autoklaven mit Stickstoff auf ca. 0,2 bar Überdruck eingestellt. Es wurde langsam auf 130°C aufgeheizt und nach Erreichen dieser Temperatur der Druck erneut auf 0,2 bar Überdruck eingestellt. Danach wurde bei 130°C die gewünschte Menge PO zudosiert (siehe Beispiele), wobei der Druck 4,0 bar nicht übersteigen sollte. Nach beendeter PO-Zugabe ließ man noch 30 Minuten bei 130°C nachreagieren.

Der Alkoxylierungsgrad wurde mittels ¹³C-NMR bestimmt. Diese Bestimmungsmethode ist für die Zwecke vorliegender Erfindung stets anzuwenden.

Boltorn^{®} H20 und Boltorn^{®} H310 sind Dendrimere aus einer Dihydroxycarbonsäure und einem Polyol.

### Beispiele

### Beispiel 1:

Boltorn^{®} H20 + 10 mol PO/OH + 5 mol EO/OH
(mittlere Molmasse laut GPC ca. 11500 g/mol)

### Beispiel 2:

Boltorn^{®} H20 + 20 mol PO/OH + 10 mol EO/OH
(mittlere Molmasse laut GPC ca. 22900 g/mol)

### Beispiel 3:

Boltorn^{®} H20 + 10 mol EO/OH + 10 mol PO/OH
(mittlere Molmasse laut GPC ca. 15200 g/mol)

### Beispiel 4:

Boltorn^{®} H20 + [10 mol EO/OH + 10 mol PO/OH]-Mischung
(mittlere Molmasse laut GPC ca. 15600 g/mol)

### Beispiel 5:

Boltorn^{®} H20 + 40 mol PO/OH + 20 mol EO/OH
(mittlere Molmasse laut GPC ca. 47500 g/mol)

### Beispiel 6:

Boltorn^{®} H310 + 20 mol PO/OH + 10 mol EO/OH
(mittlere Molmasse laut GPC ca. 39600 g/mol)

### Beispiel 7:

Boltorn^{®} H310 + [20 mol PO/OH + 10 mol EO/OH]-Mischung
(mittlere Molmasse laut GPC ca. 40200 g/mol)

### Beispiel 8:

Boltorn^{®} H310 + 20 mol PO/OH + 20 mol EO/OH
(mittlere Molmasse laut GPC ca. 53500 g/mol)

### Beispiel 9:

Boltorn^{®} H310 + 10 mol EO/OH + 10 mol PO/OH
(mittlere Molmasse laut GPC ca. 27100 g/mol)

### Beispiel 10:

Vernetzung des alkoxylierten Dendrimers aus Beispiel 1 mit Bisphenol-A-diglycidylether

In einem 250 ml Dreihalskolben mit Kontaktthermometer, Rührer und Rückflusskühler wurden 100 g alkoxyliertes Dendrimer unter leichter Stickstoffspülung auf 80°C aufgeheizt. Bei dieser Temperatur wurden 2,5 g Bisphenol-A-diglycidylether (80%ige Lösung in einem aromatischen Lösungsmittel) zügig zugetropft. Daraufhin wurde die Reaktionstemperatur auf 120°C erhöht und die Reaktionsmischung 8 h rühren gelassen bis mittels Titration der Epoxidzahl kein unumgesetzter Diglycidylether mehr nachgewiesen werden konnte. Das Produkt wurde am Rotationsverdampfer zur Trockene einrotiert (Ausbeute: 101,9 g) und die Molmasse über GPC (M* ≈ 18200 g/mol, Standard Polyethylenglykol) analysiert.

### Beispiel 11

### Vernetzung des alkoxylierten Dendrimers aus Beispiel 1 mit Dodecylbernsteinsäureanhydrid

In einem 250 ml Dreihalskolben mit Kontaktthermometer, Rührer und Wasserabscheider wurden 100,0 g alkoxyliertes Dendrimer, 1,5 g Alkylbenzolsulfonsäure und 3,5 g Dodecylbernsteinsäureanhydrid bei Raumtemperatur vorgelegt. Daraufhin wurde die Reaktionsmischung auf 165°C aufgeheizt und weitere 8 h bei dieser Temperatur rühren gelassen, bis sich im Wasserabscheider kein Reaktionswasser mehr bildete (Reaktionskontrolle: Säurezahl). Das Produkt wurde am Rotationsverdampfer zur Trockene einrotiert (Ausbeute: 102,9 g) und die Molmasse über GPC (M* ≈ 19800 g/mol, Standard Polyethylenglykol) analysiert.

### Beispiel 12

### Vernetzung des alkoxylierten Dendrimers aus Beispiel 1 mit Toluol-2,4-diisocyanat

In einem 250 ml Dreihalskolben mit Kontaktthermometer, Rührer und Rückflusskühler wurden 100,0 g alkoxyliertes Dendrimer unter leichter StickstoffSpülung auf 60°C aufgeheizt. Daraufhin wurden bei dieser Temperatur 3,0 g Toluol-2,4-diisocyanat langsam zugetropft. Die Reaktionstemperatur wurde auf 100°C erhöht und die Reaktionsmischung weitere 8 h bei dieser Temperatur gerührt (Reaktionskontrolle: lsocyanatzahl). Das Produkt wurde am Rotationsverdampfer zur Trockene einrotiert (Ausbeute: 102,8 g) und die Molmasse über GPC (M* ≈ 21400 g/mol, Standard Polyethylenglykol) analysiert.

### Bestimmung der Spaltwirksamkeit von Erdölemulsionsspaltern

Zur Bestimmung der Wirksamkeit eines Emulsionsspalters wurde die Wasserabscheidung aus einer Rohölemulsion pro Zeit sowie die Entwässerung und Entsalzung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad (30°C und 50°C) gestellt und die Wasserabscheidung verfolgt.

Während und nach beendeter Emulsionsspaltung wurden Proben von dem Öl aus dem oberen Teil des Spalterglases (sog. Topöl) entnommen und der Wassergehalt nach Karl Fischer und der Salzgehalt konduktometrisch bestimmt. Auf diese Weise konnten die neuen Spalter nach Wasserabscheidung sowie Entwässerung und Entsalzung des Öls beurteilt werden.

### Spaltwirkung der beschriebenen Emulsionsspalter

Ursprung der Rohölemulsion: Holzkirchen Sonde 3, Deutschland

| | |
|---|---|
| Wassergehalt der Emulsion: | 46 % |
| Salzgehalt der Emulsion: | 5 % |
| Demulgiertemperatur: | 50°C |

**Tabelle 1:**

| Wirksamkeit von alkoxylierten Dendrimeren als Emulsionsspalter im Vergleich zu Standardprodukten (Dosierrate 20 ppm) | | | | | | | | | | | |
|---|---|---|---|---|---|---|---|---|---|---|---|
| Wasserabscheidung [ml] pro Zeit [min] | 5 | 10 | 20 | 30 | 45 | 60 | 90 | 120 | 180 | Wasser im Topöl [%] | Salz im Topöl [ppm] |
| Produkt aus 1 | 0 | 0 | 5 | 11 | 27 | 33 | 38 | 42 | 44 | 0,79 | 152 |
| Produkt aus 2 | 1 | 4 | 10 | 16 | 35 | 42 | 45 | 45 | 45 | 0,40 | 98 |
| Produkt aus 3 | 2 | 5 | 12 | 18 | 36 | 42 | 45 | 45 | 46 | 0,32 | 73 |
| Produkt aus 4 | 2 | 5 | 13 | 19 | 37 | 43 | 45 | 45 | 45 | 0,38 | 68 |
| Produkt aus 5 | 4 | 9 | 18 | 27 | 38 | 43 | 45 | 46 | 46 | 0,14 | 25 |
| Produkt aus 6 | 1 | 5 | 12 | 18 | 34 | 42 | 44 | 44 | 45 | 0,58 | 94 |
| Produkt aus 7 | 1 | 6 | 13 | 19 | 34 | 43 | 45 | 45 | 45 | 0,51 | 81 |
| Produkt aus 8 | 2 | 8 | 17 | 28 | 39 | 44 | 45 | 46 | 46 | 0,27 | 31 |
| Produkt aus 9 | 5 | 10 | 23 | 32 | 40 | 45 | 46 | 46 | 46 | 0,21 | 20 |
| Produkt aus 10 | 4 | 9 | 23 | 34 | 42 | 45 | 45 | 46 | 46 | 0,27 | 32 |
| Produkt aus 11 | 2 | 5 | 13 | 25 | 35 | 42 | 42 | 43 | 43 | 0,59 | 78 |
| Produkt aus 12 | 3 | 10 | 24 | 32 | 40 | 45 | 45 | 45 | 46 | 0,15 | 22 |
| Standard 1: Dissolvan 1952 (Vergleich) | 0 | 0 | 3 | 6 | 10 | 17 | 23 | 28 | 32 | 1,59 | 420 |
| Standard 2: Dissolvan 4738 (Vergleich) | 0 | 0 | 0 | 4 | 10 | 24 | 33 | 39 | 39 | 0,92 | 205 |

**Tabelle 2:**

| Biologische Abbaubarkeit alkoxylierter Dendrimere (*closed bottle test* nach OECD 306) im Vergleich zu Standardprodukten | | |
|---|---|---|
| Biologische Abbaubarkeit [%] nach | 14 Tagen | 28 Tagen |
| Produkt aus 1 | 25,7 | 46,8 |
| Produkt aus 6 | 32,9 | 55,6 |
| Produkt aus 10 | 30,7 | 49,5 |
| Produkt aus 12 | . 45,7 | 62,5 |
| Standard: Dissolvan 1952 (Vergleich) | 4,0 | 9,3 |
| Standard: Dissolvan 4738 (Vergleich) | 19,8 | 26,3 |
| Referenz (Natriumbenzoat) (Vergleich) | 61,7 | 82,4 |

## Patentansprüche

1. Verwendung alkoxylierter Dendrimere, welche dendritische Polyester sind, mit einem-Molekulargewicht von 2400 bis 100.000 g/mol, die mit C₂-C₄-Alkylenoxidgruppen oder einer Mischung solcher Alkylenoxidgruppen alkoxyliert sind, so dass das alkoxylierte Dendrimer einen Alkoxylierungsgrad von 1 bis 100 Alkylenoxideinheiten pro freier OH-Gruppe aufweist, zur Spaltung von Öl/Wasser-Emulsionen, in Mengen von 0,0001 bis 5 Gew.-%, bezogen auf den Ölgehatt der zu spaltenden Emulsion.

2. Verwendung gemäß Anspruch 1, wobei es sich bei dem Dendrimer um dendritische Polyester basierend auf einem mono-, di- oder polyfunktionellen Startalkohol und einer Carbonsäure als dendritische Wachstumskomponente, die wenigstens zwei Hydroxygruppen aufweist, handelt.

3. Verwendung gemäß Anspruch 1 und/oder 2, wobei es sich bei dem verwendeten Startalkohol um Bis(trimethylolpropan), Bis(trimethylolethan), Dipentaerythrit, Pentaerythrit, Alkoxyliertes Pentaerythrit, Trimethylolethan, Trimethylolpropan, Alkoxyliertes Trimethylolpropan, Glycerin, Diglycerin, Triglycerin, Polyglycerin, Neopentylglykol, Dimethylolpropan, Sorbitol oder Mannitol handelt.

4. Verwendung gemäß einem oder mehreren der Ansprüche 1 bis 3, wobei es sich bei der Carbonsäure zum dendritischen Kettenwachstum um Dimethylolpropansäure, α,α-Bis(hydroxymethyl)butansäure, α,α,α-Tris(hydroxymethyl)ethansäure, α,α-Bis(hydroxymethyl)pentansäure, α,α-Bis(hydroxy)propansäure oder 3,5-Dihydroxybenzoesäure handelt.

5. Verwendung gemäß einem oder mehreren der Ansprüche 1 bis 4, wobei die alkoxylierten Dendrimere ein Molekulargewicht von 10.000 bis 50.000 g/mol aufweisen.

6. Verwendung gemäß einem oder mehreren der Ansprüche 1 bis 5, bei denen der mittlere Alkoxylierungsgrad zwischen 1 und 70 Alkylenoxideinheiten pro freier OH-Gruppe beträgt.

7. Verwendung gemäß einem oder mehreren der Ansprüche 1 bis 6, worin das Alkylenoxid Ethylenoxid oder Propylenoxid ist.

8. Verwendung gemäß einem oder mehreren der Ansprüche 1 bis 7, worin eine Mischalkoxylierung mit Ethylenoxid und Propylenoxid im Verhältnis von 1:2 bis 1:10 vorliegt.

9. Verwendung gemäß einem oder mehreren der Ansprüche 1 bis 8, wobei die alkoxylierten Dendrimere mittels Bisphenol-A-diglycidylether, Butan-1,4-dioldiglycidylether, Hexan-1,6-dioldiglycidylether, Ethylenglykoldiglycidylether, Cyclohexandimethanoldiglycidylether, Resorcindiglycidylether, Glycerindiglycidylether, Glycerintriglycidylether. Glycerinpropoxylattriglycidylether, Polyglycerinpolyglycidylether, *p*-Aminophonoltriglycidylether, Polypropylengtykoldiglycidylether, Pentaerythrittetraglycidylether, Sorbitolpolyglycidylether, Trimethylolpropantriglycidylether, Castoröltriglycidylether, Diaminobiphenyltetraglycidylether, Sojaölepoxid, Adipinsäure, Maleinsäure, Phthalsäure, Maleinsäureanhydrid, Bernsteinsäureanhydrid, Dodecylbernsteinsäureanhydrid, Phthalsäureanhydrid, Trimellitsäureanhydrid, Pyromellitsäureanhydrid, Dimethoxydimethylsilan, Diethoxydimethylsilan, Toluoldiisoyanat, Diphenylmethandiisocyanat vernetzt werden.

## Claims

1. The use of alkoxylated dendrimers, which are dendritic polyesters, having a molecular weight of from 2400 to 100 000 g/mol which have been alkoxylated with C₂-C₄-alkylene oxide groups or a mixture of such alkylene oxide groups such that the alkoxylated dendrimer has a degree of alkoxylation of from 1 to 100 alkylene oxide units per free OH group, for breaking oil/water emulsions, in amounts of from 0.0001 to 5% by weight, based on the oil content of the emulsion to be broken.

2. The use as claimed in claim 1, where the dendrimer is a dendritic polyester based on a mono-, di- or polyfunctional starting alcohol and a carboxylic acid as dendritic growth component which has at least two hydroxyl groups.

3. The use as claimed in claim 1 and/or 2, where the starting alcohol used is bis(trimethylolpropane), bis(trimethylolethane), dipentaerythritol, pentaerythritol, alkoxylated pentaerythritol, trimethylolethane, trimethylolpropane, alkoxylated trimethylolpropane, glycerol, diglycerol, triglycerol, polyglycerol, neopentyl glycol, dimethylolpropane, sorbitol or mannitol.

4. The use as claimed in one or more of claims 1 to 3, where the dendritic chain growth carboxylic acid is dimethylolpropanoic acid, α,α-bis(hydroxymethyl)butanoic acid, α,α,α-tris(hydroxymethyl)ethanoic acid, α,α-bis(hydroxymethyl)pentanoic acid, α,α-bis(hydroxy)propanoic acid or 3,5-dihydroxybenzoic acid.

5. The use as claimed in one or more of claims 1 to 4, where the alkoxylated dendrimers have a molecular weight of from 10 000 to 50 000 g/mol.

6. The use as claimed in one or more of claims 1 to 5, in which the average degree of alkoxylation is between 1 and 70 alkylene oxide units per free OH group.

7. The use as claimed in one or more of claims 1 to 6, in which the alkylene oxide is ethylene oxide or propylene oxide.

8. The use as claimed in one or more of claims 1 to 7, in which a mixed alkoxylation with ethylene oxide and propylene oxide with the ratio from 1:2 to 1:10 is present.

9. The use as claimed in one or more of claims 1 to 8, where the alkoxylated dendrimers are crosslinked using bisphenol A diglycidyl ether, butane-1,4-diol diglycidyl ether, hexane-1,6-diol diglycidyl ether, ethylene glycol diglycidyl ether, cyclohexanedimethanol diglycidyl ether, resorcinol diglycidyl ether, glycerol diglycidyl ether, glycerol triglycidyl ether, glycerol propoxylate triglycidyl ether, polyglycerol polyglycidyl ether, p-aminophenol triglycidyl ether, polypropylene glycol diglycidyl ether, pentaerythritol tetraglycidyl ether, sorbitol polyglycidyl ether, trimethylolpropane triglycidyl ether, castor oil triglycidyl ether, diaminobiphenyl tetraglycidyl ether, soya oil epoxide, adipic acid, maleic acid, phthalic acid, maleic anhydride, succinic anhydride, dodecylsuccinic anhydride, phthalic anhydride, trimellitic anhydride, pyromellitic anhydride, dimethoxydimethylsilane, diethoxydimethylsilane, toluene diisocyanate, diphenylmethane diisocyanate.

## Revendications

1. Utilisation de dendrimères alcoxylés qui sont des polyesters dendritiques, ayant un poids moléculaire de 2 400 à 100 000 g/mole, alcoxylés avec des groupes oxyde d'alkylène en C₂ à C₄ ou un mélange de tels-groupes oxyde d'alkylène, de manière à ce que le dendrimère alcoxylé présente un degré d'alcoxylation de 1 à 100 unités d'oxyde d'alkylène pour chaque groupe OH libre, afin de cliver des émulsions huile/eau, dans des quantités de 0,0001 à 5 % en poids par rapport à la teneur en huile de l'émulsion à cliver.

2. Utilisation selon la revendication 1, dans laquelle le dendrimère représente des polyesters dendritiques à base d'un alcool d'amorçage monofonctionnel, bifonctionnel ou polyfonctionnel et d'un acide carboxylique en tant que composant de croissance dendritique qui présente au moins deux groupes hydroxy.

3. Utilisation selon la revendication 1 et/ou 2, dans laquelle l'alcool d'amorçage utilisé est du bis(triméthylolpropane), du bis(triméthyloléthane), de la dipentaérythrite, de la pentaérythrite, de la pentaérythrite alcoxylée, du triméthyloléthane, du triméthylolpropane, du triméthylolpropane alcoxylé, du glycérol, du diglycérol, du triglycérol, du polyglycérol, du néopentylglycol, du diméthylolpropane, du sorbitol ou du mannitol.

4. Utilisation selon l'une quelconque ou plusieurs des revendications 1 à 3, dans laquelle l'acide carboxylique pour la croissance en chaîne dendritique est un acide diméthylol-propanoïque, un acide α-α-bis(hydroxyméthyl)butanoïque, un acide α-α-α-tris(hydroxyméthyl)éthanoïque, de l'acide α-α-bis(hydroxyméthyl)pentanoïque, de l'acide α-α-bis(hydroxy)propanoïque ou de l'acide 3,5-dihydroxybenzoïque.

5. Utilisation selon l'une quelconque ou plusieurs des revendications 1 à 4, dans laquelle les dendrimères alcoxylés présentent un poids moléculaire de 10 000 à 50 000 g/mole.

6. Utilisation selon l'une quelconque ou plusieurs des revendications 1 à 5, dans laquelle le degré d'alcoxylation moyen est compris entre 1 et 70 unités d'oxyde d'alkylène par groupe OH libre.

7. Utilisation selon l'une quelconque ou plusieurs des revendications 1 à 6, dans laquelle l'oxyde d'alkylène est de l'oxyde d'éthylène ou de l'oxyde de propylène.

8. Utilisation selon l'une quelconque ou plusieurs des revendications 1 à 7, dans laquelle il y a une alcoxylation mixte avec de l'oxyde d'éthylène et de l'oxyde de propylène dans un rapport de 1:2 à 1:10.

9. Utilisation selon l'une quelconque ou plusieurs des revendications 1 à 8, dans laquelle les dendrimères alcoxylés sont réticulés avec de l'éther diglycidylique de bisphénol A, de l'éther diglycidylique de butane-1,4-diol, de l'éther diglycidylique d'hexane-1,6-diol, de l'éther diglycidylique d'éthylène glycol, de l'éther diglycidylique de cyclohexane-diméthanol, de l'éther diglycidylique de résorcine, de l'éther diglycidylique de glycérol, de l'éther triglycidylique de glycérol, de l'éther triglycidylique de propoxylate glycérol, de l'éther polyglycidylique de polyglycérol, de l'éther triglycidylique de p-aminophénol, de l'éther diglycidylique de polypropylène glycol, de l'éther tétraglycidylique de pentaérythrite, de l'éther polyglycidylique de sorbitol, de l'éther triglycidylique de triméthylolpropane, de l'éther triglycidylique d'huile de castor, de l'éther tétraglycidylique de diaminobiphényle, de l'époxyde d'huile de soja, de l'acide adipique, de l'acide maléique, de l'acide phtalique, de l'anhydride d'acide maléique, de l'anhydride d'acide succinique, de l'anhydride d'acide dodécylsuccinique, de l'anhydride d'acide phtalique, de l'anhydride d'acide trimellitique, de l'anhydride d'acide pyromellitique, du diméthoxydiméthylsilane, du diéthoxydiméthylsilane, du diisocyanate de toluène, du diisocyanate de diphénylméthane.
